# DEMANDE DE BREVET EUROPEEN

(11) **EP 2 439 901 A1**
(43) Date de publication de la demande: **11.04.2012**
(21) Numéro de dépôt: 11184206.8
(22) Date de dépôt: 06.10.2011
(51) Int. Cl.: H04L 29/06, H04L 29/12

(54) **Procédé de traitement dans un module d'un dispositif d'accès adapté pour connecter un réseau distant à une pluralité de réseaux locaux, module et programme d'ordinateur associés**

(30) Priorité: 06.10.2010 FR 1058086
(71) Demandeur: Société Française du Radiotéléphone-SFR, 75008 Paris (FR)
(72) Inventeur: Chirossel, Olivier, 13012 Marseille (FR); Sultan, Alexis, 75019 PARIS (FR); Arvinte, Alexandre, 75012 PARIS (FR); Passien, Olivier, 78950 GAMBAIS (FR)
(74) Mandataire: Marconnet, Sébastien

(57) **Abrégé**

Procédé de traitement dans un dispositif d'accès (21) connectant un réseau distant (23) à un premier réseau local privé (22) et un deuxième réseau local itinérant (29), comprenant les étapes suivantes à réception d'un message provenant d'un terminal du premier, respectivement deuxième, réseau :
- remplacement dans le message d'un premier port du terminal par un deuxième port du dispositif et d'une adresse IP source locale du terminal par une adresse IP publique du dispositif d'accès ;
- indication dans une table de correspondances (TBL), du premier port, du deuxième port et de l'adresse IP source locale ;

préalablement un premier sous-ensemble (E1) et un deuxième sous-ensemble (E2) de ports du dispositif ont été dédiés respectivement au premier réseau local (22) et au deuxième réseau local (29), et
le deuxième port est sélectionné dans le premier sous-ensemble si le terminal fait partie du premier réseau local et dans le deuxième sous-ensemble si le terminal fait partie du deuxième réseau local.

## Description

### Domaine de l'invention

La présente invention concerne le domaine des dispositifs d'accès, encore appelés passerelles ou routeurs-modems, et adaptés pour connecter un réseau distant tel qu'Internet à un ou plusieurs réseaux locaux.

### Etat de la technique

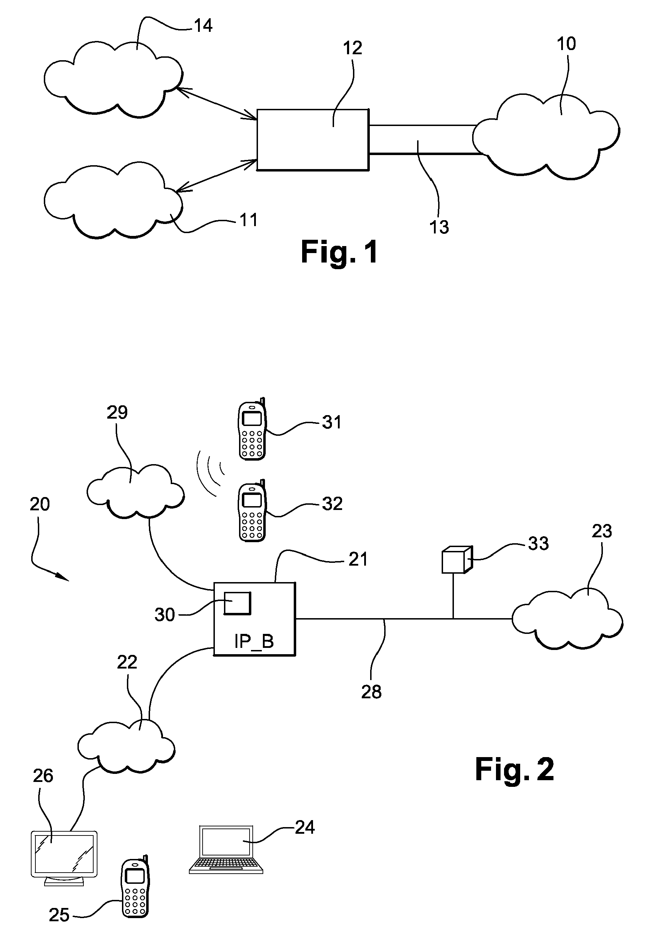

La connexion à un réseau distant 10, par exemple Internet, depuis un réseau local 11 (LAN pour Local Area Network) domestique de l'abonné, illustrée à la figure 1, se fait classiquement à l'aide d'un dispositif d'accès 12, appelé généralement modem. Un exemple de dispositif d'accès 12 est un équipement fourni par un Fournisseur d'Accès Internet (FAI) à ses usagers, tel que celui commercialisé sous les marques Neufbox ou SFR Box. Outre la connexion à Internet, il offre par exemple des services annexes tels que téléphonie IP et télévision IP par exemple en HD.

Un dispositif d'accès 12 est ainsi une interface de routage et de conversion de protocole de télécommunications. Il relie des réseaux différents les uns des autres, des réseaux locaux comme ici le réseau local domestique 11, et le réseau distant 10 via le réseau 13 du FAI. Une adresse réseau IP publique délivrée par le FAI est attribuée au dispositif d'accès 12 sur le réseau 13 du FAI et le réseau distant 10. Les adresses réseaux IP privées locales sont attribuées aux réseaux locaux par le dispositif d'accès 12. Les plages d'adresses publiques ou privées sont régies par le document technique RFC 1978, il n'y a notamment aucun recouvrement entre adresses publiques et privées. La plage d'adresses privées attribuée à un réseau local par le dispositif 12 est appelé un « Subnet ». Les « Subnets» attribués par le dispositif 12 aux réseaux locaux sont tous distincts.

Les terminaux du réseau local 11 de l'usager, susceptibles de se connecter au dispositif 12 d'accès, sont par exemple de type ordinateur personnel, téléphone ou téléviseur. Le dispositif d'accès 12 attribue une adresse IP locale privée (choisie dans le « Subnet » attribué au dispositif 11) distincte à chacun des terminaux pour les distinguer entre eux. La connexion entre le réseau local 11 et le dispositif d'accès 12 est réalisée par voie filaire et/ou radio, par exemple par l'intermédiaire d'une liaison Ethernet et/ou Wi-Fi.

Aujourd'hui, la plupart des dispositifs 12 d'accès sont en outre des points d'accès publics, également connus sous l'appellation de « HotSpot ». Ces « HotSpots » permettent de ce fait aux usagers itinérants de profiter de la bande passante Wi-Fi, non utilisée par l'usager du réseau local 11 auquel a été attribué le dispositif d'accès, afin d'accéder depuis leurs terminaux de communication à une messagerie, au réseau Internet, ou à des applications partagées. Un utilisateur itinérant (sur un réseau local 1), voulant se connecter au réseau distant 10 par l'intermédiaire du dispositif 12 d'accès, doit s'authentifier avant toute connexion au réseau distant 10. Le dispositif 12 attribue, par l'intermédiaire d'un DHCP, une adresse IP locale privée (choisie dans le « Subnet » du réseau local 14) propre à chacun des terminaux de communication itinérants pour les reconnaître. Cette adresse IP locale privée est forcément différente de l'identifiant IP public du dispositif 12 d'accès. Ces terminaux de communication font ainsi partie d'un réseau local 14 itinérant, qui est distinct du réseau local 11 domestique et qui dispose d'un adressage IP privé qui lui est propre (son « Subnet »).

Dans certains réseaux de FAI, une adresse IP publique distincte est attribuée au réseau local 11 d'une part, et d'autre part aux terminaux d'usagers itinérants du réseau itinérant 14, tous connectés sur le même dispositif d'accès 12, pour les distinguer sur le réseau du FAI et le réseau distant.

Afin de ralentir la survenue de l'épuisement des blocs d'adresses IP disponibles, notamment pour la version 4 de protocole Internet dite IPv4, certains fournisseurs d'accès Internet ont en revanche limité l'octroi d'adresse IP publique dans la plupart des offres grand public : ainsi il est attribué une unique adresse IP publique au dispositif 12 d'accès et aux terminaux quel que soit leur réseau privé d'appartenance 11 ou 14, cette unique adresse IP publique destinée à les identifier dans les échanges entre le dispositif d'accès 12, le réseau 13 du FAI et le réseau distant 10. Les adresses IP privées propres aux différents terminaux au sein des réseaux locaux sont utilisées pour identifier ces terminaux dans les échanges entre ces terminaux et le dispositif d'accès 12.

Afin de pouvoir utiliser cette adresse IP publique unique pour tous les réseaux locaux dans les échanges entre le dispositif d'accès 12 et le réseau distant 10, le dispositif d'accès 12 utilise une technique de traduction d'adresse réseau dynamique (en anglais « Network Address Translation ») dit NAT, encore nommé « mascarade IP », qui utilise un mécanisme de traduction de port virtuel (en anglais « Port Address Translation »), dit PAT, c'est-à-dire l'affectation dynamique d'un port source virtuel du dispositif d'accès 12 différent à chaque connexion. Le NAT fait l'objet du document technique RFC 3022.

De manière générale, la connexion est à l'initiative du réseau local « hotspot » 14, : aucune connexion entrante ne devrait pouvoir être configurée au niveau du modem-routeur vers un équipement présent dans ce LAN. Le routeur-modem doit permettre par contre une connexion depuis le réseau local privé 11 de l'utilisateur et aussi une connexion vers des équipements en IP fixe présent dans ce réseau local 11 privé de l'utilisateur.

Le suivi de connexion au niveau de la table de NAT du routeur est pris en compte de manière naturelle pour le protocole TCP qui est un protocole « connecté » et empirique (notion de time out pour purger les connexions UDP de la tables de suivi de connexion de la table NAT) pour le protocole UDP qui est « non connecté ».

Ainsi, dans chaque connexion issue d'un terminal d'un réseau local 11, 14 et reçue par le dispositif d'accès 12 et destinée au réseau distant 10, avant de la transmettre à destination du réseau distant 10, le dispositif d'accès 12 remplace respectivement l'adresse IP locale du terminal et le port source du terminal qui sont indiqués dans la requête, par respectivement l'adresse IP publique du dispositif 12 et un port source du dispositif d'accès 12. Puis, il met à jour une table de correspondance de manière à pouvoir maintenir une correspondance entre les requêtes provenant des réseaux locaux 11, 14 et les réponses provenant du réseau distant 10, toutes adressées à l'adresse IP publique unique du dispositif d'accès. Lorsqu'il reçoit la réponse à la requête, la réponse indiquant le port source du dispositif d'accès, le dispositif d'accès 12 peut déduire le port source du terminal à l'aide de la table de correspondance et ainsi router la réponse au terminal concerné au sein de son réseau local.

La table de correspondance, stockée dans le dispositif d'accès 12, comporte dans une ligne de correspondance relative à la requête, un champ « port source terminal », un champ « port source dispositif d'accès », un champ « port Destination » un champ « adresse IP publique destination » et un champ « adresse IP privée ».

Le contenu de la table est volatile et dynamique.

L'inconvénient de cette solution est qu'il n'est pas possible, pour le FAI, de déterminer, en considérant un message émis depuis le dispositif d'accès 12 à destination du réseau distant 10, si ce message provient du réseau local domestique 11 ou du réseau local itinérant 14, ni de quel usager il provient. Le FAI est seulement capable de fournir avec certitude une identification de l'usager à qui appartient le dispositif 12 d'accès, à partir de l'adresse IP publique présente dans le message en tant qu'adresse IP source et attribuée à ce dispositif d'accès 12.

Or, il existe un besoin de réaliser une identification précise du réseau local et/ou de l'usager d'un des réseaux locaux dont provient le message, notamment dans les applications suivantes :
■ réquisitions judiciaires, Hadopi,
■ services d'alerte de sécurité (détection des paquets infectés et alertes de l'usager),
■ services de détermination de profils d'usage de l'abonné domestique d'un dispositif d'accès (en anglais « profiling ») par exemple dans l'objectif de monétiser la base d'abonnés (Pub),
■ micro-paiement par détection du réseau du foyer pour affecter l'achat,
■ alimentation temps réel d'une base, permettant d'avoir une réponse temps réel sur qui consulte un site (mobile itinérant ou fixe).

### Exposé de l'invention

Suivant un premier aspect, l'invention propose un procédé de traitement dans un module d'un dispositif d'accès adapté pour connecter un réseau distant à une pluralité de réseaux locaux comprenant au moins un premier réseau local et un deuxième réseau local,
le procédé comprenant les étapes i/, ii/, iii/ suivantes à réception d'un message provenant d'un terminal du premier, respectivement deuxième, réseau et destiné au réseau distant :
i/ remplacement dans le message d'un premier port source virtuel du terminal par un deuxième port source virtuel du dispositif ;
ii/ remplacement dans le message d'une adresse IP source locale du terminal identifiant le terminal dans le premier, respectivement deuxième, réseau, par une adresse IP publique identifiant auprès du réseau distant le dispositif d'accès et les premier et deuxième réseaux locaux ;
iii/ indication dans une table de correspondances, du premier port source
   virtuel, du deuxième port source virtuel et de l'adresse IP source locale ;
selon lequel préalablement un premier sous-ensemble de ports source virtuels du dispositif a été dédié sélectivement au premier réseau local et un deuxième sous-ensemble de ports source virtuels du dispositif distinct du premier sous-ensemble a été dédié sélectivement au deuxième réseau local, et
le deuxième port source virtuel est sélectionné par le module dans le premier sous-ensemble si le terminal fait partie du premier réseau local et est sélectionné dans le deuxième sous-ensemble si le terminal fait partie du deuxième réseau local.

Un tel procédé permet, considérant un message transmis par un dispositif d'accès à destination du réseau distant, de distinguer en fonction du port source indiqué dans le message, de quel réseau local provient le message, parmi au moins deux réseaux locaux interfacés par le dispositif d'accès avec le réseau distant. Et ce, alors même que les différents réseaux locaux partagent la même adresse IP publique. Cette disposition permet d'adapter le traitement apporté à ce message en fonction de sa provenance, par exemple de décider ou non d'envoyer une alerte relative à l'infection du message par un virus etc..

Par exemple, en fonction du réseau local, une authentification supplémentaire peut être requise ou non pour une application de paiement sur Internet.

Correspondant à la couche de transport du modèle OSI, la notion de port virtuel permet, sur un équipement informatique donné, de distinguer différentes applications qui écoutent et/ou émettent des informations sur un ou des ports affectés dynamiquement aux applications et distingués par leur numéro, codé sur 16 bits, soit de 0 à 65535.

Les ports virtuels permettent de réaliser simultanément des milliers de connexions logiques sur la même adresse IP. Ils permettent de partager la liaison Internet entre des applications différentes et des machines différentes.

Dans un mode de réalisation, le premier réseau local est un réseau local domestique d'un abonné d'un fournisseur d'accès dudit dispositif d'accès et le deuxième réseau local est un réseau itinérant sans fil distinct du premier réseau. Pour certaines applications telles que le micro-paiement, ou le « profiling » de l'abonné détenteur de la boîte (réseau local domestique), il est utile de différencier les messages provenant d'usagers itinérants et ceux provenant du réseau local domestique de l'abonné détenteur du dispositif d'accès considéré.

Dans un mode de réalisation, lors d'une ouverture de session par un terminal dans le deuxième réseau local, on affecte sélectivement audit terminal pendant la durée de la session une liste dédiée de ports disponibles du deuxième sous-ensemble de ports virtuels source du dispositif et pendant ladite session, chaque deuxième port source virtuel ultérieurement sélectionné par le module dans le deuxième sous-ensemble dans une étape iii) sera sélectionné dans la liste dédiée audit terminal. Cette disposition contribue à permettre la différenciation des terminaux dont proviennent les messages transitant entre le dispositif d'accès et le réseau distant.

Dans un mode de réalisation, suite à l'affectation d'une liste de ports source virtuels à un terminal, le module modifie en fonction de ladite affectation des règles d'affectation du deuxième port source pour mettre en oeuvre l'étape iii). Une telle adaptation dynamique permet de mettre à jour le pare-feu au fur et à mesure des nouvelles sessions et de profiter pleinement des ressources de ports sources disponibles.

Dans un mode de réalisation, on envoie des informations à destination d'un serveur du réseau distant, indiquant au moins l'adresse IP publique identifiant le dispositif d'accès auprès du réseau distant, l'adresse IP locale du terminal, la liste de ports source virtuels du dispositif dédiée au terminal et un étiquetage temporel relatif à la tenue de la session du terminal, ainsi que l'identifiant de l'utilisateur à qui l'adresse IP Privée a été attribuée lors de son authentification pour cette session. Cette disposition contribue à permettre la différenciation des terminaux dont proviennent les messages transitant entre le dispositif d'accès et le réseau distant. Ainsi à partir d'un message intercepté entre le dispositif d'accès et le réseau distant indiquant une adresse IP publique commune à plusieurs réseaux locaux, un port source virtuel du dispositif d'accès et une datation, on détermine en fonction des informations présentes dans le serveur, l'adresse IP locale source du terminal ayant émis le message et donc l'identifiant de l'utilisateur à qui elle a été attribuée lors de son authentification.

Dans un mode de réalisation, lors d'une fermeture de session par le terminal, la liste dédiée au terminal est rendue disponible pour une future affectation à un terminal du deuxième réseau local. Une telle exploitation en dynamique contribue à fluidifier et accélérer le traitement des messages, en permettant l'utilisation de tous les ports du deuxième sous-ensemble, dès qu'ils sont disponibles.

Dans un mode de réalisation, le message et la table de correspondances indiquent aussi un port virtuel de destination et une adresse IP de destination relatifs au réseau distant pour ledit message. Cette disposition contribue à renforcer la fiabilité de la détermination du terminal d'un réseau local auquel adresser une réponse au message lorsque la réponse est reçue par le dispositif d'accès.

Dans un mode de réalisation, le dispositif d'accès est adapté pour connecter un réseau distant à une pluralité de réseaux locaux. Un sous-ensemble de ports source virtuels du dispositif a été dédié sélectivement à chaque réseau local de la pluralité de réseaux locaux. Le procédé comprend les étapes suivantes à réception d'un message provenant d'un terminal d'un quelconque desdits réseaux locaux et destiné au réseau distant :
i/ remplacement dans le message d'un premier port source virtuel par un deuxième port source virtuel,
ii/ remplacement dans le message d'une adresse IP source locale du terminal identifiant le terminal dans ledit réseau local par l'adresse IP publique identifiant auprès du réseau distant le dispositif d'accès et les réseaux locaux,
iii/ indication dans la table de correspondances, du premier port source virtuel, du deuxième port source virtuel et de l'adresse IP source locale.

Un tel procédé permet, considérant un message transmis par un dispositif d'accès à destination du réseau distant, de distinguer en fonction du port source indiqué dans le message, de quel réseau local provient le message, parmi plusieurs (deux ou plus) réseaux locaux interfacés par le dispositif d'accès avec le réseau distant, les différents réseaux locaux partagent la même adresse IP publique dans le réseau distant. Cette disposition permet d'adapter le traitement apporté à ce message en fonction de sa provenance, par exemple de décider ou non d'envoyer une alerte relative à l'infection du message par un virus etc..

Suivant un deuxième aspect, l'invention propose un module d'un dispositif d'accès adapté pour connecter un réseau distant à une pluralité de réseaux locaux comprenant au moins un premier réseau local et un deuxième réseau local, un premier sous-ensemble de ports source virtuels du dispositif ayant été préalablement dédié sélectivement au premier réseau local et un deuxième sous-ensemble de ports source virtuels du dispositif distinct du premier sous-ensemble ayant été dédié sélectivement au deuxième réseau local,
ledit module étant adapté pour, à réception d'un message provenant d'un terminal du premier, respectivement deuxième, réseau et destiné au réseau distant :
i/ remplacer dans le message un premier port source virtuel du terminal par un deuxième port source virtuel du dispositif,
ii/ remplacer dans le message une adresse IP source locale du terminal identifiant le terminal dans le premier, respectivement deuxième, réseau, par une adresse IP publique identifiant auprès du réseau distant le dispositif d'accès et les premier et deuxième réseaux locaux,
iii/ indiquer dans une table de correspondances, le premier port source virtuel, le deuxième port source virtuel et l'adresse IP source locale,
ledit module étant adapté pour sélectionner le deuxième port source virtuel dans le premier sous-ensemble si le terminal fait partie du premier réseau local, respectivement dans le deuxième sous-ensemble si le terminal fait partie du deuxième réseau local.

Suivant un troisième aspect, l'invention propose un programme d'ordinateur destiné à un dispositif d'accès adapté pour connecter un réseau distant à une pluralité de réseaux locaux comprenant au moins un premier réseau local et un deuxième réseau local, ledit programme d'ordinateur comprenant des instructions pour mettre en oeuvre, lors de l'exécution des instructions sur des moyens de calcul, les étapes d'un procédé suivant le premier aspect de l'invention.

### Brève description des dessins

D'autres caractéristiques et avantages de l'invention apparaîtront encore à la lecture de la description qui va suivre. Celle-ci est purement illustrative et doit être lue en regard des dessins annexés sur lesquels :
- la figure 1 est une représentation schématique d'un système de l'art antérieur comprenant un boîtier d'accès d'un FAI connectant deux réseaux locaux de l'état de la technique, à un réseau distant, tel qu'Internet tel que déjà décrit ;
- la figure 2 représente un système comprenant un dispositif d'accès intégrant un module dans un mode de réalisation de l'invention ;
- la figure 3 représente une répartition des ports du dispositif d'accès dans un mode de mise en oeuvre de l'invention ;
- la figure 4 représente des messages et une table de correspondances dans un mode de mise en oeuvre de l'invention ;
- la figure 5 est un organigramme représentant différentes étapes d'un procédé dans un mode de mise en oeuvre de l'invention.

### Description détaillée de modes de réalisation de l'invention

Il est représenté, sur la figure 2, un système de télécommunications désigné par la référence générale 20 dans un mode de mise en oeuvre de l'invention. Le système 20 comprend un dispositif d'accès 21 s'intercalant entre des réseaux. Ce type de dispositif 21 d'accès couramment appelé «box » propose par exemple des offres Triple-Play (Internet, téléphonie et télévision) ainsi que de nombreuses fonctionnalités telles que routeur, connexion Wi-Fi. Ce dispositif d'accès 21 est fourni par un fournisseur d'accès Internet (FAI) à ses abonnés, notamment à ses abonnés ADSL. L'équipement ADSL commercialisé sous la marque Neufbox® de SFR est un exemple de tel dispositif d'accès. Généralement, le dispositif d'accès 21 est relié au réseau téléphonique du domicile de l'abonné.

Dans l'exemple considéré, le dispositif d'accès 21 s'intercale d'une part entre un réseau local 22 et le réseau 28 du FAI de connexion au réseau Internet 23. Le dispositif d'accès 21 a pour fonction notamment de gérer des flux de communication entre le réseau local 22 et le réseau Internet 23. Le réseau local 22 est un réseau domestique privé, utilisant le protocole IP, de l'abonné auquel le dispositif d'accès 21 a été fourni par le FAI.

Le dispositif d'accès 21 est muni d'une borne d'accès sans fil (non représentée) en émission/réception à un réseau radio. La borne peut être une borne Wi-Fi, Bluetooth (marque déposée du Bluetooth® SIG, Inc.) ou Wimax ou tout autre technologie permettant un accès mixte propriétaire / itinérant (FemtoCell, LTE...). Cette borne permet aux terminaux des utilisateurs équipés de cartes, selon la technologie Wi-Fi, Wimax ou Bluetooth utilisée, de se connecter au réseau 23 Internet. Le signal radio issu d'un module émetteur d'un terminal de l'utilisateur est capté par la borne d'accès sans fil du dispositif d'accès 21 qui se charge de le relayer vers le réseau 23 Internet.

Dans l'exemple de la figure 2, le réseau local domestique 22 est un réseau Wi-Fi. Ce réseau local 22 Wi-Fi est protégé par une clé Wi-Fi personnelle (clé Wep ou Wpa). Le dispositif d'accès 21 permet la connexion au réseau local 22 de différents équipements, tels qu'un ordinateur 24, un téléphone 25, comprenant des moyens d'émission et de réception de signaux Wi-Fi. Le réseau local 22 Wi-Fi peut être un réseau utilisant notamment la bande de fréquence des 2,4 GHz ou 5 GHz permettant un débit de 11 Mb/s ou de 54 Mb/s.

Dans un mode de réalisation, le réseau local 22 domestique est, ou comporte en outre, un réseau filaire Ethernet, le dispositif d'accès 21 comprenant alors des ports physiques de connexion d'équipements, par exemple d'un téléviseur 26, au réseau local 22, par exemple des prises de type RJ45.

Les équipements susceptibles de se connecter au dispositif d'accès 21 sont des équipements compatibles avec le protocole IP. Le dispositif d'accès 21 comprend un serveur DHCP destiné à l'attribution automatique et dynamique d'un identifiant réseau, notamment d'une adresse IP locale, à tout équipement se connectant au dispositif d'accès par voie filaire ou radio.

L'adresse IP locale permet au dispositif d'accès 21 de distinguer les équipements les uns des autres et ainsi de leur envoyer des messages qui leur sont destinés.

Le dispositif d'accès 21 est également configuré de sorte à se comporter comme un point d'accès public également connu sous l'appellation de « HotSpot », en permettant à des usagers itinérants de se connecter à un réseau privé itinérant 29 sans fil. Il leur permet en fait de profiter de la bande passante sans fil non utilisée afin d'accéder depuis leurs terminaux 31, 32 de communication (téléphones, PDA, PC, etc.) à une messagerie, au réseau 23 Internet, ou à des applications partagées. Dans un mode de réalisation, les usagers itinérants peuvent profiter d'un débit de l'ordre de 512 Ko/seconde.

Un utilisateur itinérant, voulant se connecter au réseau distant 23 par l'intermédiaire du dispositif 22 d'accès, doit au préalable s'associer avant toute authentification. Lors de la phase d'association, un terminal 31 itinérant adresse une requête d'attachement au dispositif 21 d'accès qui réclame son identité en retour. Le dispositif 21 d'accès gère chaque demande d'attachement par le biais de deux ports virtuels : un port ouvert restreint au trafic d'authentification et un port sous contrôle initialement fermé. Le port sous contrôle reste fermé dans cette phase, prévenant tout accès direct aux ressources réseau partagées. Le dispositif 21 d'accès relaie les messages d'authentification vers un serveur d'authentification local ou déporté au sein du réseau du FAI. Le serveur authentifie le terminal 31, 32 itinérant. L'authentification peut être effectuée par la saisie d'un identifiant et d'un mot de passe ou par le biais d'un programme apte à jouer une identification par le biais de processus automatisés.

Une autorisation est retournée par le serveur d'authentification au dispositif 21 d'accès qui relaiera désormais l'ensemble du trafic du terminal 31. Le port sous contrôle associé à la connexion, passe de l'état fermé à ouvert.

Le dispositif 12 attribue par l'intermédiaire de son serveur DHCP, après association, une adresse IP locale à chacun des terminaux 31, 32 de communications itinérants, pour les distinguer, ce qui en fait le réseau privé itinérant 29 sans fil. Ce réseau local itinérant 29 sans fil est distinct du réseau local 22 domestique.

Lors d'une opération de mise en marche ou de resynchronisation du dispositif d'accès 21 sur le réseau 28 du FAI, un identifiant réseau IP public, nommé IPBB ci-après, délivré par le FAI est attribué audit dispositif d'accès pour l'identifier auprès du réseau IP 23 et du réseau FAI 28. Dans certains cas, cet identifiant réseau IP public change à chaque reconnexion/resynchronisation du dispositif sur le réseau du FAI.

Le dispositif d'accès 21 est un intermédiaire entre d'une part le réseau local domestique 22 et le réseau local itinérant 29 et d'autre part le réseau 23 Internet. Tous les équipements du réseau local domestique 22 et du réseau local itinérant 29 connectés au réseau 23 Internet par l'intermédiaire de ce dispositif d'accès 21 ont le même identifiant public IPB sur ledit réseau distant 23.

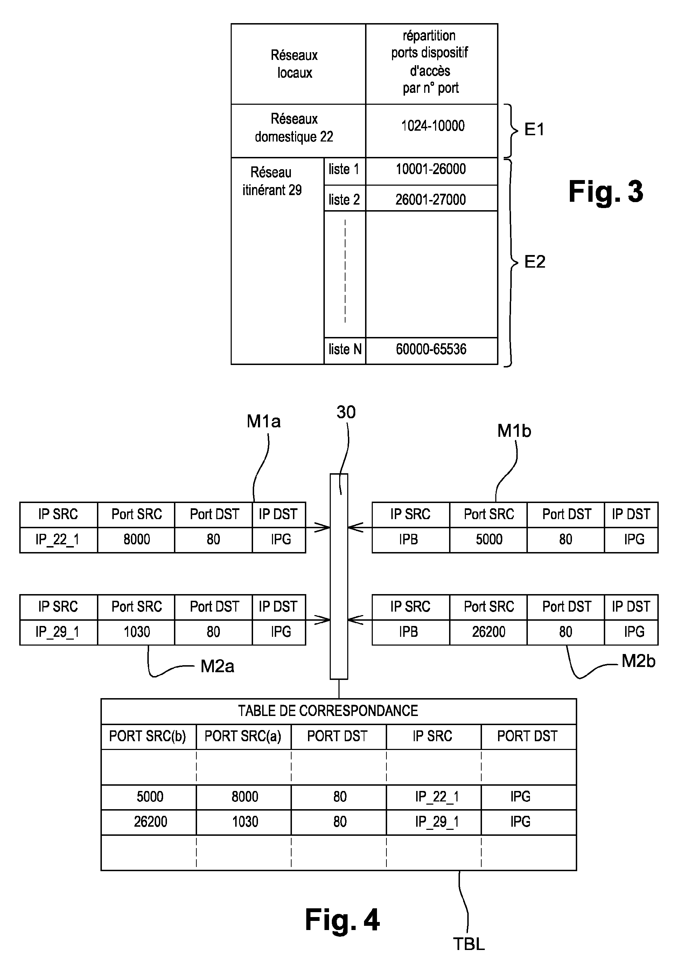

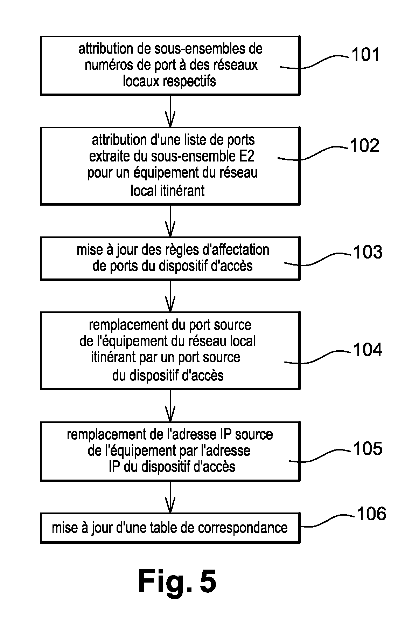

En référence à la figure 3 représentant les ports du dispositif d'accès 21 et à la figure 5, dans un mode de réalisation de l'invention, dans une étape préalable 101, parmi les 65535 ports source du dispositif destinés à distinguer les paquets émis par le dispositif d'accès 21, un premier sous-ensemble de ports E1 est affecté au réseau local domestique 22 et un deuxième sous-ensemble E2 est affecté au réseau local itinérant 29, les sous-ensembles E1 et E2 étant disjoints. Cette affectation est par exemple implémentée lors de la fabrication du dispositif d'accès et/ou réalisée/actualisée lors d'une mise en service ou réinitialisation du dispositif d'accès 21 par un module de traitement 30 dudit dispositif d'accès, suite par exemple à des instructions transmises au dispositif d'accès 21 par le réseau du FAI.

Dans l'exemple représenté en figure 3, le premier sous-ensemble E1 comprend les ports numérotés 1024 à 10000 et le deuxième sous-ensemble E2 comprend les ports numérotés 10001 à 65536.

Dans un mode de réalisation, lors d'une ouverture de session par un terminal, par exemple par un téléphone 31, dans le réseau local itinérant 29, par exemple en même temps que l'attribution à ce terminal d'une adresse IP locale par le serveur DHCP, une liste de ports disponibles est en outre extraite du sous-ensemble E2 et dédiée par le module de traitement 30 au terminal 31 identifié par cette adresse IP locale, dans une étape 102. La taille de la liste est fixe ou variable ; les listes sont prédéfinies ou au contraire constituées de façon dynamique.

L'étape 102 est optionnelle. Elle n'est pas nécessaire par exemple dans le cas où l'on ne souhaite qu'identifier de quel réseau local provient un message.

L'étape 102 doit être mise en oeuvre en revanche si l'on veut identifier à l'intérieur de chaque réseau local les utilisateurs à l'origine des messages. On associe alors à l'adresse IP de l'utilisateur un sous-ensemble de ports du sous-ensemble E2. Ce qui est optionnel dans ce dernier cas, c'est la façon dynamique, voire aléatoire, de choisir la liste de ports disponibles dans le sous-ensemble de E2 qui va être affecte à cette adresse. Il est important de noter que le choix d'une liste de ports à affecter doit être fait de façon qu'elle soit disjointe de toute autre liste de ports du sous-ensemble de E2 actuellement attribuée à un autre utilisateur, identifié par une autre adresse IP. En d'autres termes, l'ensemble des listes affectées du sous-ensemble E2, doit toujours être à un instant t, un sous-ensemble d'une partition de E2.

Sur la figure 3 sont représentées, dans un exemple de composition de listes, N listes de ports dans le sous-ensemble E2 dédié au réseau local itinérant 29. Ainsi la liste libellée « liste 1 » comprend les ports numérotés 10001 à 26000.

En fonction de cette attribution d'une liste à ce terminal 31, le module de traitement 30 met à jour des règles dynamiques d'affectation de ports du dispositif d'accès 21, par exemple dans un système de type pare-feu (étape 103). Ces règles sont utilisées pour affecter un port du dispositif d'accès à chacun des paquets provenant des réseaux locaux et destinés au réseau distant.23.

Lorsqu'un équipement du réseau domestique 22 ou du réseau itinérant 29 envoie un paquet IP de données à un destinataire du réseau Internet 23, ce paquet est d'abord reçu par le dispositif d'accès 21. Ce paquet tel que reçu par le dispositif d'accès 21 comporte un en-tête comprenant un champ («IP SRC ») indiquant l'adresse IP locale de l'équipement source du message, dite adresse IP source, un champ (« PORT SRC ») indiquant le port d'écoute de l'équipement source du message utilisé pour le paquet, un champ (« PORT DST ») indiquant le port du destinataire dans le réseau distant 23 qui est utilisé pour le paquet et un champ (« IP DST ») indiquant l'adresse IP publique du destinataire du paquet dans le réseau distant, par exemple un serveur de messagerie.

Un certain nombre d'opérations sont alors effectuées par le module de traitement 30 du dispositif d'accès 21 et détaillées ci-après.

Dans ce paquet reçu, dans une étape 104, le module de traitement 30 remplace dans le champ « PORT SRC » le port d'écoute de l'équipement source du message utilisé pour le paquet par un port du dispositif d'accès 21 qui sera utilisé pour le paquet.

Ce port du dispositif d'accès est sélectionné par le module de traitement 30 à l'aide des règles dynamiques d'affectation, par exemple de la manière suivante en fonction de l'adresse IP source identifiant l'équipement :
- si le paquet reçu provient d'un équipement du réseau local privé 22, alors le port source du dispositif d'accès utilisé pour le paquet est sélectionné aléatoirement parmi le premier sous-ensemble de ports E1 ;
- si le paquet reçu provient d'un équipement du réseau local itinérant 29, alors le port source du dispositif d'accès utilisé pour le paquet est sélectionné aléatoirement parmi la liste du deuxième sous-ensemble de ports E2 ayant été attribuée à l'équipement lors de l'étape 102 mise en oeuvre lors de l'ouverture de session par ce terminal.

Puis dans une étape 105, le module de traitement 30 remplace dans le champ « IP SRC » l'adresse IP locale dudit équipement par l'identifiant réseau IP public IPB du dispositif d'accès 21.

Puis, dans une étape 106, le module de traitement 30 enregistre temporairement dans une table de correspondances les informations suivantes relatives au paquet : le port source du dispositif d'accès choisi dans l'étape 104, le port source de l'équipement, l'adresse IP source locale de l'équipement et, dans un mode de réalisation, le port destination et l'adresse IP publique du destinataire.

Le paquet ainsi modifié est alors transmis à destination du réseau distant 23 par le dispositif d'accès 21 et routé vers le destinataire en fonction du contenu du champ « IP DST ».

A titre d'exemple a été représenté en figure 4 l'en-tête M1a d'un paquet issu d'un équipement du réseau local privé 22 d'adresse IP locale référencée IP_22_1 indiquant le port n° 8000 comme port source utilisé de l'équipement pour ce paquet. Cet en-tête indique en outre que le paquet est destiné à un destinataire dans le réseau distant d'adresse IP publique IPG avec un port destination n° 80 (pour la consultation d'un serveur HTTP par le biais d'un navigateur web).

L'en-tête M1b représente l'en-tête résultant du traitement effectué par le module de traitement 30. Dans le champ « IP SRC » figure maintenant l'identifiant IP public du dispositif d'accès 21 (IPB) et dans le champ « PORT SRC » un port source (n° 5000) du dispositif d'accès 21 choisi dans le premier sous-ensemble E1.

A titre d'exemple encore a été représenté en figure 4 l'en-tête M2a d'un paquet issu d'un équipement du réseau local itinérant 29, d'adresse IP locale référencée IP_29_1 indiquant le port n° 1030 comme port source utilisé de l'équipement pour ce paquet. Cet en-tête indique que le paquet est également destiné au destinataire dans le réseau distant d'adresse IP publique IPG avec également le port destination n° 80.

On suppose que la liste nommée « liste 2 » en figure 3 a été attribuée lors de l'étape 102 à l'équipement considéré.

L'en-tête M2b représente l'en-tête résultant du traitement effectué par le module de traitement 30. Dans le champ « IP SRC » figure maintenant l'identifiant IP public du dispositif d'accès 21 (IPB) et dans le champ « PORT SRC » un port source (n° 26200) du dispositif d'accès 21 choisi dans la liste nommée liste 2 du sous-ensemble de ports E2.

Dans un exemple, la table de correspondances TBL mise à jour par le module de traitement 30 comporte les champs suivants :
- le champ « PORT SRC b » comprend le port, affecté au paquet, du dispositif d'accès ;
- le champ « PORT SRC a » comprend le port, affecté au paquet, de l'équipement ;
- le champ « PORT DST) indique le port du destinataire dans le réseau distant 23 qui est utilisé pour le paquet ; et
- le champ « IP DST » indique l'adresse IP publique du destinataire du paquet dans le réseau distant.

En figure 4 sont représentés ces champs renseignés suite au traitement des deux paquets à en-tête M1a et M2a.

Dans ces exemples, suite à la réception d'un paquet, par exemple le paquet d'en-tête M1b en provenance du dispositif d'accès 21, le serveur HTTP de destination, d'adresse publique IPG depuis le port 80, renvoie la réponse à l'identifiant IP public IPB indiqué dans le paquet M1b sur le port n° 5000 du dispositif d'accès indiqué dans le champ « PORT SRC » du paquet M1a.

A l'aide de la table de correspondances, cherchant la ligne de la table de correspondance comportant dans le champ « PORT SRC b » le n° 5000, dans le champ « PORT DST » le n° 80 et dans le champ « IP DEST » l'adresse IPG, le module de traitement 30 en déduit que cette réponse provenant du réseau distant 23 est à transmettre à l'équipement d'adresse IP locale IP_22_1 sur le port n° 8000 de l'équipement.

Similairement suite à la réception du paquet d'en-tête M2b en provenance du dispositif d'accès 21, le serveur HTTP de destination, d'adresse publique IPG depuis le port 80, renvoie la réponse correspondante à l'identifiant IP public IPB indiqué dans le paquet M2b sur le port n° 26200 du dispositif d'accès indiqué dans le champ « PORT SRC » du paquet M2b.

A l'aide de la table de correspondances, cherchant la ligne de la table de correspondances comportant dans le champ « PORT SRC b » le n° 26000, dans le champ « PORT DST » le n° 80 et dans le champ « IP DEST » l'adresse IPG, le module de traitement 30 en déduit que cette réponse provenant du réseau distant 23 est à transmettre à l'équipement d'adresse IP locale IP_29_1 sur le port n° 1030 de l'équipement.

A la fermeture d'une session ouverte pour un équipement du réseau itinérant 29, le module de traitement 30 libère dans le sous-ensemble E2 les ports de la liste affectée à cet équipement. Il met à jour les règles d'affectation de ports du dispositif aux paquets.

Au fur et à mesure des paquets traités par le module de traitement 30, les lignes de la table de correspondances renseignées pour les messages considérés ci-dessus seront écrasées par de nouvelles lignes concernant de nouveaux paquets à transmettre.

L'invention permet ainsi, lors d'une analyse d'un paquet transmis depuis un dispositif d'accès 21, de déterminer en fonction du numéro de port source indiqué dans le paquet, de quel réseau local parmi le réseau local privé 22 et le réseau local itinérant 29, provient ce paquet.

Cette détermination permet alors d'adapter le traitement, ou encore d'effectuer des traitements sélectivement en fonction de la provenance.

L'invention est particulièrement utile dans les applications suivantes:
■ surveillance de la diffusion des oeuvres et la protection des droits sur Internet notamment dans le cadre de la loi dite Hadopi ;
■ services d'alerte de sécurité (détection des paquets infectés et alertes de l'usager d'un réseau privé) ;

■ services de détermination de profils d'usage de l'abonné domestique/itinérant d'un dispositif d'accès (en anglais « profiling ») par exemple dans l'objectif de monétiser la base d'abonnés (Pub) ;
■ micro-paiement par détection du réseau du foyer pour affecter l'achat;
■ alimentation temps réel d'une base, permettant d'avoir une réponse temps réel sur qui consulte un site (mobile itinérant ou fixe).

L'invention permet en outre de distinguer les paquets d'un réseau local d'un autre réseau local. La tranche de ports affectés sélectivement et exclusivement à un instant donné à une adresse IP locale dans un réseau local, permet de distinguer les différents utilisateurs au sein d'un même réseau local.

Notamment, dans un mode de réalisation optionnel par exemple mis en oeuvre pour des surveillances de type Hadopi, des tickets sont établis par le module de traitement 30 à destination d'un serveur 33 représenté en figure 2. Un ticket indique pour un équipement du réseau local itinérant 29, la liste des ports source du dispositif d'accès 21 qui lui ont été attribués à l'étape 102 lors de l'ouverture d'une session, l'identifiant IP public du dispositif d'accès 21, l'adresse IP locale de l'équipement et des données d'horodatage datant l'ouverture et/ou la fermeture de la session pour l'équipement, ainsi que l'identifiant de l'utilisateur à qui l'adresse IP locale a été attribuée lors de son authentification.

Dans un mode de réalisation, ce serveur 33 stocke ces tickets dans une mémoire, et éventuellement compile les informations contenues dans les fichiers pour simplifier leur exploitation

Par exemple, lorsque qu'un ticket est émis à l'ouverture d'une session par un équipement et à la fermeture de la session par l'équipement, le serveur 33 peut déduire de ces deux tickets la période de tenue de la session et stocker ces informations dans une base, par exemple sous la forme d'un quintuplet d'informations du type (IP publique du dispositif d'accès, IP locale de l'équipement, identifiant de l'utilisateur, liste des ports source attribuée, heure de début de session, heure de fin de session) .

Suivant les modes de réalisation, le serveur 33 est adressable sur le réseau 28 du FAI ou adressable sur le réseau distant 23.

L'invention permet ainsi d'identifier précisément l'émetteur d'un paquet dans un réseau local itinérant, à l'aide d'informations figurant dans l'en-tête du paquet et dans les tickets.

Par exemple, sur fourniture par un tiers du triplet suivant extrait d'un paquet (IP publique du dispositif d'accès, port source dispositif d'accès et heure), à partir des informations ainsi stockées dans le serveur, on détermine s'il s'agit du réseau local privé ou d'un réseau local itinérant. S'il s'agit d'un réseau local itinérant, on peut identifier duquel il s'agit s'il y en a plusieurs et en outre on peut déterminer, à l'aide du quintuplet correspondant, l'adresse IP privée de l'utilisateur concerné et son identifiant.

La distribution en sous-ensemble de ports et/ou en listes de ports dans les sous-ensembles peut se faire de manière variée suivant les modes de réalisation. Dans l'exemple considéré, une liste ou un sous-ensemble est constitué(e) de ports contigus. Toute autre distribution, par exemple discrète au moins en partie, est possible : par exemple le sous-ensemble pour un premier réseau local est par exemple un sous-ensemble de numéros de ports pairs, tandis que le sous-ensemble pour un deuxième réseau local est par exemple un sous-ensemble de numéros de ports impairs.

Dans le mode de réalisation considéré, la distribution de ports virtuels est effectuée entre deux réseaux locaux interconnectés par le dispositif d'accès au réseau distant. Dans un autre mode de réalisation, un nombre N strictement supérieur à 2 de réseaux locaux sont interconnectés par le dispositif d'accès au réseau distant et N sous-ensembles disjoints de ports du dispositif d'accès sont constitués, chacun attribué sélectivement à un réseau local distinct. Dans un mode de réalisation, chacun ou certains de ces sous-ensembles de ports sont répartis en listes de ports en vue d'une attribution d'une liste de ports à une adresse IP locale d'un équipement du réseau local concerné lors d'une ouverture de session par cet équipement.

Dans le mode de réalisation considéré, on a considéré que cette répartition de ports source virtuels entre les réseaux locaux était figée pour un ensemble de dispositifs d'accès. Dans un autre mode de réalisation, la répartition varie selon les dispositifs d'accès du FAI et alors il convient qu'une base dans un serveur accessible par le FAI soit mise à jour avec indication pour chaque dispositif d'accès identifié par son adresse IP publique, du sous-ensemble de ports à chaque réseau local.

Dans un mode de réalisation, les étapes d'un procédé selon l'invention qui sont indiquées ci-dessus sont mises en oeuvre suite à l'exécution d'instructions logicielles d'un programme d'ordinateur sur des moyens de calcul inclus dans le module de traitement 30 et/ou le dispositif d'accès 21.

## Revendications

1. Procédé de traitement dans un module (30) d'un dispositif d'accès (21) adapté pour connecter un réseau distant (23) à une pluralité de réseaux locaux (22, 29) comprenant au moins un premier réseau local (22) et un deuxième réseau local (29),
le procédé comprenant les étapes i/, ii/, iii/ suivantes à réception d'un message provenant d'un terminal du premier, respectivement deuxième, réseau et destiné au réseau distant :
i/ remplacement dans le message d'un premier port source virtuel du terminal par un deuxième port source virtuel du dispositif ;
ii/ remplacement dans le message d'une adresse IP source locale du terminal identifiant le terminal dans le premier, respectivement deuxième, réseau, par une adresse IP publique identifiant auprès du réseau distant le dispositif d'accès et les premier et deuxième réseaux locaux ;
iii/ indication dans une table de correspondances (TBL), du premier port
source virtuel, du deuxième port source virtuel et de l'adresse IP source locale ;
selon lequel préalablement un premier sous-ensemble (E1) de ports source virtuels du dispositif a été dédié sélectivement au premier réseau local (22) et un deuxième sous-ensemble (E2) de ports source virtuels du dispositif distinct du premier sous-ensemble a été dédié sélectivement au deuxième réseau local (29), et
le deuxième port source virtuel est sélectionné par le module de traitement dans le premier sous-ensemble si le terminal fait partie du premier réseau local et est sélectionné dans le deuxième sous-ensemble si le terminal fait partie du deuxième réseau local,
alors que lors d'une ouverture de session par un terminal dans le deuxième réseau local (29) :
- on affecte sélectivement audit terminal pendant la durée de la session une liste (« liste 1 ») dédiée de ports disponibles du deuxième sous-ensemble (E2) de ports virtuels source du dispositif ; et
pendant ladite session, chaque deuxième port source virtuel ultérieurement sélectionné par le module de traitement (30) dans le deuxième sous-ensemble dans une étape iii) sera sélectionné dans la liste dédiée audit terminal.

2. Procédé selon la revendication 1, selon lequel le premier réseau local (22) est un réseau local domestique d'un abonné d'un fournisseur d'accès dudit dispositif d'accès et le deuxième réseau local (29) est un réseau itinérant sans fil distinct du premier réseau.

3. Procédé selon la revendication précédente, selon lequel suite à l'affectation d'une liste de ports source virtuels à un terminal, le module de traitement (30) modifie en fonction de ladite affectation des règles d'affectation du deuxième port source pour mettre en oeuvre l'étape iii.

4. Procédé selon l'une des revendications 1 à 3, selon lequel on envoie des informations à destination d'un serveur (33) du réseau distant (23), indiquant au moins l'adresse IP publique identifiant le dispositif d'accès (21) auprès du réseau distant, l'adresse IP locale du terminal, la liste de ports source virtuels du dispositif dédiée au terminal et un étiquetage temporel relatif à la tenue de la session du terminal, ainsi que l'identification de l'utilisateur à qui a été attribuée l'adresse IP locale lors de son authentification.

5. Procédé selon l'une des revendications 1 à 4, selon lequel lors d'une fermeture de session par ledit terminal, la liste dédiée au terminal est rendue disponible pour une future affectation à un terminal du deuxième réseau local.

6. Procédé selon l'une quelconque des revendications précédentes, selon lequel le message et la table de correspondances (TBL) indiquent aussi un port virtuel destination et une adresse IP de destination relatifs au réseau distant (23) pour ledit message.

7. Procédé selon l'une quelconque des revendications précédentes, le dispositif d'accès (21) étant adapté pour connecter un réseau distant (23) à une pluralité de réseaux locaux (22, 29), selon lequel un sous-ensemble de ports source virtuels du dispositif (E1, E2) a été dédié sélectivement à chaque réseau local (22, 29) de la pluralité de réseaux locaux ;
le procédé comprenant les étapes suivantes à réception d'un message provenant d'un terminal d'un quelconque desdits réseaux locaux et destiné au réseau distant:
i/ remplacement dans le message d'un premier port source virtuel par un deuxième port source virtuel;
ii/ remplacement dans le message d'une adresse IP source locale du terminal identifiant le terminal dans ledit réseau local par l'adresse IP publique identifiant auprès du réseau distant le dispositif d'accès et les réseaux locaux,
iii/ indication dans la table de correspondances (TBL), du premier port source virtuel, du deuxième port source virtuel et de l'adresse IP source locale.

8. Module (30) d'un dispositif d'accès (21) adapté pour connecter un réseau distant (23) à une pluralité de réseaux locaux comprenant au moins un premier réseau (22) local et un deuxième réseau local (29),
un premier sous-ensemble (E1) de ports source virtuels du dispositif ayant été préalablement dédié sélectivement au premier réseau local (22) et un deuxième sous-ensemble (E2) de ports source virtuels du dispositif distinct du premier sous-ensemble ayant été dédié sélectivement au deuxième réseau local (29),
ledit module étant adapté pour, à réception d'un message provenant d'un terminal du premier, respectivement deuxième, réseau et destiné au réseau distant :
i/ remplacer dans le message un premier port source virtuel du terminal par un deuxième port source virtuel du dispositif ;
ii/ remplacer dans le message une adresse IP source locale du terminal identifiant le terminal dans le premier, respectivement deuxième, réseau, par une adresse IP publique identifiant auprès du réseau distant le dispositif d'accès et les premier et deuxième réseaux locaux ;
iii/ indiquer dans une table de correspondances (TBL), le premier port source virtuel, le deuxième port source virtuel et l'adresse IP source locale ;
ledit module étant adapté pour sélectionner le deuxième port source virtuel dans le premier sous-ensemble si le terminal fait partie du premier réseau local, respectivement dans le deuxième sous-ensemble si le terminal fait partie du deuxième réseau local,
ledit module étant adapté pour, lors d'une ouverture de session d'un terminal dans le deuxième réseau local (29), affecter sélectivement audit terminal pour la durée de la session, une liste (« liste 1 ») dédiée de ports disponibles du deuxième sous-ensemble de ports virtuels source du dispositif ; et pour, dans une étape iii) ultérieure au cours de ladite session, sélectionner dans la liste dédiée audit terminal dans le deuxième sous-ensemble, chaque deuxième port source virtuel.

9. Module (30), selon la revendication 8, d'un dispositif d'accès (21) adapté pour connecter un réseau distant à au moins le premier réseau local et le deuxième réseau local, le premier réseau local (22) étant un réseau local domestique d'un abonné d'un fournisseur d'accès dudit dispositif d'accès et le deuxième réseau local (29) étant un réseau itinérant sans fil distinct du premier réseau.

10. Module (30) selon la revendication précédente, adapté pour, suite à l'affectation d'une liste de ports source virtuels à un terminal, modifier en fonction de ladite affectation des règles d'affectation du deuxième port source pour mettre en oeuvre l'étape iii.

11. Module (30) selon l'une des revendications 8 à 11, adapté pour envoyer des informations à destination d'un serveur (33) du réseau distant, indiquant au moins l'adresse IP publique identifiant le dispositif d'accès auprès du réseau distant, l'adresse IP locale du terminal, la liste de ports source virtuels du dispositif dédiée au terminal et un étiquetage temporel relatif à la tenue de la session du terminal.

12. Module (30) selon l'une des revendications 8 à 11, adapté pour, lors d'une fermeture de session par ledit terminal, rendre disponible la liste dédiée au terminal pour une future affectation à un terminal du deuxième réseau local.

13. Module (30) selon l'une quelconque des revendications 8 à 12, adapté en outre pour compléter la table de correspondances (TBL) pour ledit message avec un port virtuel destination et une adresse IP de destination relatifs au réseau distant (23) et indiqués dans ledit message.

14. Module (30) selon l'une quelconque des revendications 8 à 13, d'un dispositif d'accès adapté pour connecter un réseau distant à une pluralité de réseaux locaux, un sous-ensemble de ports source virtuels du dispositif ayant été dédié sélectivement à chaque réseau local de la pluralité de réseaux locaux ; ledit module étant adapté pour, à réception d'un message provenant d'un terminal d'un quelconque desdits réseaux locaux et destiné à la transmission au réseau distant :
i/ remplacer dans le message un premier port source virtuel par un deuxième port source virtuel ;
ii/ remplacer dans le message une adresse IP source locale identifiant le terminal dans ledit réseau local par une adresse IP publique identifiant auprès du réseau distant le dispositif d'accès et les réseaux locaux ;
iii/ indiquer dans la table de correspondances, le premier port source virtuel, le deuxième port source virtuel et l'adresse IP source locale.

15. Programme d'ordinateur destiné à un dispositif d'accès (21) adapté pour connecter un réseau distant (23) à une pluralité de réseaux locaux comprenant au moins un premier réseau local (22) et un deuxième réseau local (29), comprenant des instructions pour mettre en oeuvre, lors de l'exécution desdites instructions sur des moyens de calcul, les étapes d'un procédé selon l'une quelconque des revendications 1 à 8.
